# FASCICULE DE BREVET EUROPEEN

(11) **EP 2 591 288 B1**
(45) Date de publication et mention de la délivrance du brevet: **05.09.2018**
(21) Numéro de dépôt: 11743284.9
(22) Date de dépôt: 01.07.2011
(51) Int. Cl.: F23N 1/00, F23R 3/28

(54) **PROCÉDURE D'ALLUMAGE POUR UNE CHAMBRE DE COMBUSTION DE TURBOMACHINE**
ZÜNDVERFAHREN FÜR EINE TURBINENMOTOR-VERBRENNUNGSKAMMER
IGNITION PROCEDURE FOR A TURBINE ENGINE COMBUSTION CHAMBER

(30) Priorité: 07.07.2010 FR 1055533
(43) Date de publication de la demande: 15.05.2013
(73) Titulaire: Safran Aircraft Engines, 75015 Paris (FR)
(72) Inventeur: PIEUSSERGUES, Christophe, F-77550 MOISSY-CRAMAYEL Cedex (FR); SANDELIS, Denis, Jean, Maurice, F-77550 MOISSY-CRAMAYEL Cedex (FR)
(74) Mandataire: Jolly, Christophe
(86) Numéro de dépôt international: PCT/FR2011/051555
(87) Numéro de publication internationale: WO 2012/004496

(56) Documents cités:
- EP-A1- 1 672 280
- WO-A1-03/018977
- DE-A1- 10 358 394
- DE-A1-102008 022 084
- JP-A- 2003 328 777
- JP-A- 2010 065 579
- US-A1- 2004 237 538

## Description

La présente invention concerne une procédure d'allumage d'une chambre de combustion ainsi qu'une turbomachine dans laquelle cette procédure est mise en oeuvre.

De manière connue, dans une turbomachine, une chambre annulaire de combustion est alimentée en air par un compresseur haute pression et en carburant par des injecteurs dont les têtes s'étendent dans des orifices d'un fond de chambre annulaire, les injecteurs étant régulièrement répartis autour de l'axe de la chambre. Des moyens d'allumage, tels que des bougies sont montés en aval des injecteurs dans des orifices des parois annulaires de la chambre et débouchent à l'intérieur de celle-ci.

Au sol, préalablement à l'injection de carburant dans la chambre de combustion, un démarreur est mis en fonctionnement et entraîne le rotor du compresseur haute pression de manière à faire entrer de l'air sous pression à l'intérieur de la chambre de combustion. A partir d'un régime donné, c'est-à-dire d'un nombre de tours par minute donné pour le rotor du compresseur haute pression, un débit de carburant constant est injecté à l'intérieur de la chambre simultanément à l'excitation des moyens d'allumage. Le carburant est mélangé à l'air sous pression entrant à l'intérieur de la chambre et est enflammé par les étincelles générées par les bougies d'allumage.

Le document JP2003328777 A décrit une procédure d'allumage d'une chambre de combustion de turbomachine selon le préambule de la revendication 1.

Pour faciliter l'allumage, il est connu de monter des injecteurs à débit plus important que les autres injecteurs dans l'alignement axial des bougies d'allumage de manière à avoir une richesse en carburant plus importante au niveau des bougies et ainsi garantir un allumage rapide de la chambre.

Bien que cette configuration assure un allumage fiable du carburant dans la chambre de combustion, elle s'avère toutefois plus compliquée à mettre en oeuvre qu'une configuration dans laquelle tous les injecteurs sont identiques puisque les injecteurs à débit augmenté nécessitent un réglage différent de leur clapet d'ouverture par rapport aux autres injecteurs. De plus, pour éviter le montage d'un injecteur à débit plus faible dans un emplacement prévu pour un injecteur à débit augmenté, il est nécessaire de prévoir des moyens de détrompage, ce qui complique la fabrication de la chambre. Les coûts sont également augmentés puisqu'en termes de fabrication et de maintenance, il est nécessaire d'avoir des types d'injecteurs avec des caractéristiques différentes.

L'invention a notamment pour but d'apporter une solution simple, efficace et économique à ce problème tout en évitant les inconvénients précités.

A cette fin, elle propose une procédure d'allumage d'une chambre de combustion de turbomachine, alimentée en carburant par des injecteurs et comprenant des moyens d'allumage du carburant injecté à l'intérieur de la chambre, caractérisée en ce qu'elle comprend une phase initiale durant laquelle un débit constant de carburant est injecté dans la chambre simultanément à l'excitation des moyens d'allumage et en cas de non allumage de la chambre au terme de la phase initiale, une seconde phase durant laquelle on augmente rapidement le débit de carburant injecté de 20 à 30 %, la seconde phase étant suivie d'une phase d'augmentation progressive du débit de carburant qui est plus faible et moins rapide que la seconde phase.

A la différence de la technique antérieure où le débit de carburant est maintenu constant dès le début de l'excitation des moyens d'allumage et jusqu'à l'allumage dans la chambre de combustion, la procédure d'allumage selon l'invention consiste en une phase initiale à débit constant suivie en cas de non allumage d'une phase durant laquelle le débit est rapidement augmenté de 20 à 30 % de manière à augmenter très rapidement la richesse en carburant à l'intérieur de la chambre (la richesse correspondant au rapport entre le débit de carburant injecté à l'intérieur de la chambre et le débit d'air alimentant la chambre de combustion).

En cas de non allumage persistant, l'augmentation progressive du débit de carburant permet de continuer à augmenter la richesse en carburant à l'intérieur de la chambre. Cette seconde augmentation est plus faible et moins rapide que la première de manière à éviter lors de l'allumage de la chambre, la formation de flammes importantes pouvant impacter la turbine en aval de la chambre de combustion.

Cette augmentation de la richesse facilite l'allumage de la chambre puisque la marge à l'allumage est augmentée par rapport à un maintien du débit à une valeur constante.

Selon une autre caractéristique de l'invention, l'augmentation rapide du débit de carburant est réalisée en un temps court d'environ 1 à 2 secondes de manière à augmenter très vite la richesse du mélange air/carburant dans la chambre et faciliter l'allumage rapide de la chambre.

Avantageusement, l'augmentation progressive du débit de carburant dure de 10 à 15 secondes environ.

A la fin de cette augmentation progressive, le débit de carburant des injecteurs est supérieur d'environ 50 à 80 % au débit constant de la phase initiale.

Selon une autre caractéristique de l'invention, lorsque le débit de carburant a augmenté jusqu'à une valeur maximale comprise entre 1,5 et 1,8 fois le débit de la phase initiale pendant l'augmentation progressive précitée, il est stabilisé à cette valeur maximale jusqu'à la fin de la procédure d'allumage.

Selon une autre caractéristique de l'invention, la vitesse de rotation de la turbomachine augmente progressivement pendant les deux phases précitées.

La procédure selon l'invention est avantageusement mise en oeuvre avec des injecteurs identiques et alimentés de la même façon en carburant pendant les deux phases précitées.

D'autres avantages et caractéristiques de l'invention apparaîtront à la lecture de la description suivante faite à titre d'exemple non limitatif et en référence aux dessins annexés dans lesquels :
- la figure 1 est une demi-vue schématique en coupe axiale d'une chambre de combustion de turbomachine d'un type connu ;
- la figure 2 est un graphe comprenant trois courbes dont deux représentent l'évolution du débit carburant en fonction du temps selon la procédure d'allumage de la technique antérieure et selon l'invention, la troisième courbe représentant l'évolution du régime du démarreur en fonction du temps ;
- la figure 3 est un graphe représentant l'évolution de la richesse en carburant en fonction de la vitesse de rotation du compresseur haute pression.

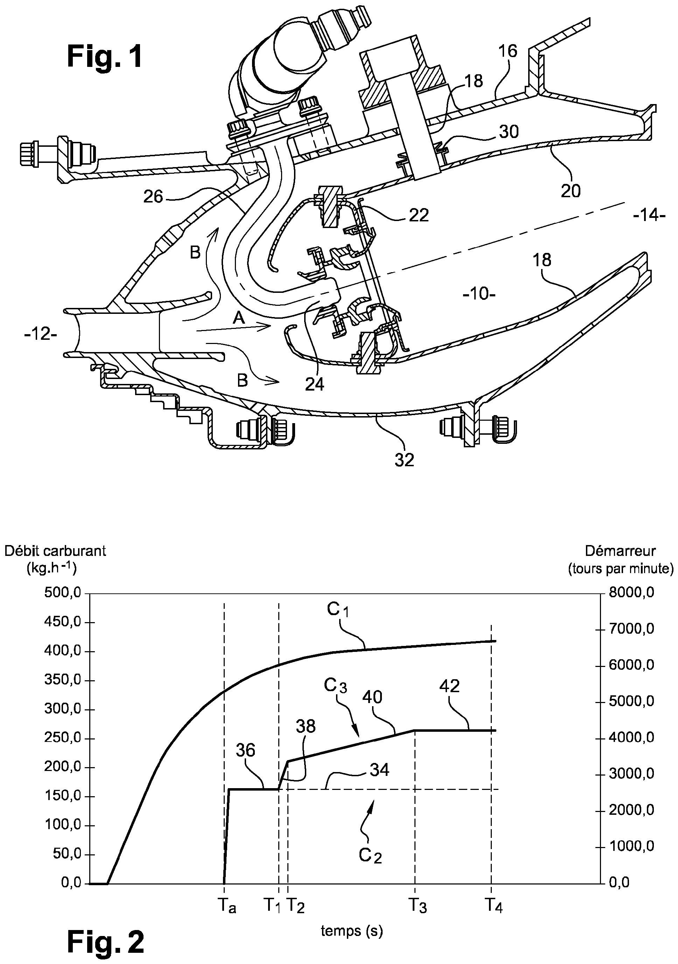

On se réfère tout d'abord à la figure 1 qui représente une chambre annulaire de combustion 10 d'une turbomachine telle qu'un turboréacteur ou un turbopropulseur d'avion, agencée entre un compresseur haute pression 12 en amont et une turbine haute pression 14 en aval.

La chambre de combustion 10 est montée à l'intérieur d'un carter externe 16 et comprend deux parois de révolution interne 18 et externe 20 reliées à leurs extrémités amont à un fond de chambre annulaire 22 comportant des orifices de passage de têtes d'injecteurs 24 alimentés en carburant par des conduits 26 d'amenée de carburant.

Au moins une bougie d'allumage 28 est portée par le carter externe 16 et est engagée dans des moyens de guidage 30 portés par la paroi de révolution externe 20. L'extrémité interne de la bougie 28 débouche à l'intérieur de la chambre 10 pour enflammer le carburant injecté à l'intérieur de celle-ci.

Le démarrage de la turbomachine est assuré au sol par un démarreur électrique dont l'arbre de sortie est relié par un train d'engrenages à l'arbre du compresseur haute pression. La mise en route du démarreur provoque la rotation de l'arbre du compresseur haute pression, ce qui induit une entrée d'air sous pression à l'intérieur de la chambre qui se divise en un flux d'air entrant à l'intérieur de la chambre de combustion et mélangé au carburant (flèche A) et en un flux d'air de contournement (flèches B) de la chambre de combustion. Le flux d'air de contournement s'écoule entre le carter interne 32 et la paroi de révolution interne 18 d'une part et entre le carter externe 16 et la paroi de révolution externe 20 d'autre part.

L'excitation des bougies 28 permet d'enflammer le carburant injecté à l'intérieur de la chambre 10 et mélangé à l'air sortant du compresseur haute pression 12.

La figure 2 est un graphe comprenant trois courbes dont la première C₁ représente en ordonnée (échelle de droite sur le graphe) l'évolution de la vitesse de rotation du démarreur en tours par minute en fonction du temps en abscisse. Les deux autres courbes représentent l'évolution du débit de carburant en kg/h injecté à l'intérieur de la chambre en ordonnée (échelle de gauche sur le graphe) en fonction du temps en abscisse, l'une C₂ des courbes étant relative à la procédure d'allumage selon la technique antérieure et l'autre C₃ à la procédure d'allumage selon l'invention.

Dans la technique connue, lorsque le régime du démarreur atteint environ 5000 à 5500 tours par minute, un débit constant 34 d'environ 150 kg/h de carburant est injecté à l'intérieur de la chambre simultanément à l'excitation des bougies d'allumage, à l'instant Tₐ.

Ce débit est maintenu constant jusqu'à l'instant T₄ correspondant à la fin de la procédure d'allumage au terme de laquelle l'alimentation des injecteurs 26 est stoppée si l'allumage n'a pas eu lieu, l'intervalle de temps T₄-Tₐ étant par exemple de l'ordre de 25 secondes.

Pour garantir un allumage fiable de la chambre de combustion, les injecteurs en alignement axial avec les bougies d'allumage 28 ont un débit de carburant qui est constant et qui est supérieur d'environ 20% au débit de carburant des autres injecteurs. De cette manière, la richesse en carburant - c'est-à-dire le rapport entre le débit de carburant et le débit d'air entrant dans la chambre de combustion - est localement augmenté au niveau des bougies d'allumage, ce qui facilite l'allumage de la chambre de combustion.

L'invention apporte une solution aux problèmes liés à l'utilisation d'injecteurs de types différents en proposant une procédure d'allumage fiable fonctionnant avec des injecteurs identiques, alimentés de la même façon en débit et en pression.

Cette procédure d'allumage (courbe C₃) comprend une phase initiale 36 d'alimentation des injecteurs à débit constant simultanément à l'excitation des bougies d'allumage entre les instants Tₐ et T₁, cette phase ayant une durée de l'ordre de 5 à 8 secondes.

A défaut d'allumage de la chambre de combustion durant cette phase initiale 36, le débit de carburant de tous les injecteurs est modifié simultanément de manière à ce que le débit de carburant dans la chambre augmente rapidement de 20 à 30 % entre les instants T₁ et T₂, cette phase 38 ayant une durée de l'ordre d'environ 1 à 2 secondes.

Cette augmentation très rapide du débit de carburant permet d'augmenter très rapidement la richesse de la chambre et facilite ainsi l'allumage de la chambre 10.

Au terme de cette seconde phase 38 et en cas de non allumage de la chambre de combustion 10, on augmente progressivement le débit de carburant durant une phase subséquente 40 entre les instants T₂ et T₃ de manière à arriver au terme de cette phase 40 d'augmentation progressive à un débit supérieur de 50 à 80% au débit de la phase initiale 36. Cette phase 40 d'augmentation progressive dure environ 10 à 15 secondes. En cas de non allumage, le débit est maintenu constant pendant la phase 42 qui s'étend entre les temps T₃ et T₄ et dure environ 8 à 10 secondes.

Si l'allumage n'a pas eu lieu au temps T₄, on arrête l'injection de carburant et l'excitation des bougies et on exécute une procédure connue avant de recommencer la procédure de démarrage.

L'invention permet ainsi de réaliser un allumage fiable de la chambre de combustion sans avoir recours à des injecteurs à débit augmenté comme dans la technique antérieure. Tous les injecteurs sont identiques et ont un fonctionnement identique en termes de débit et pression, ce qui réduit les coûts et facilite l'assemblage ainsi que les opérations de maintenance.

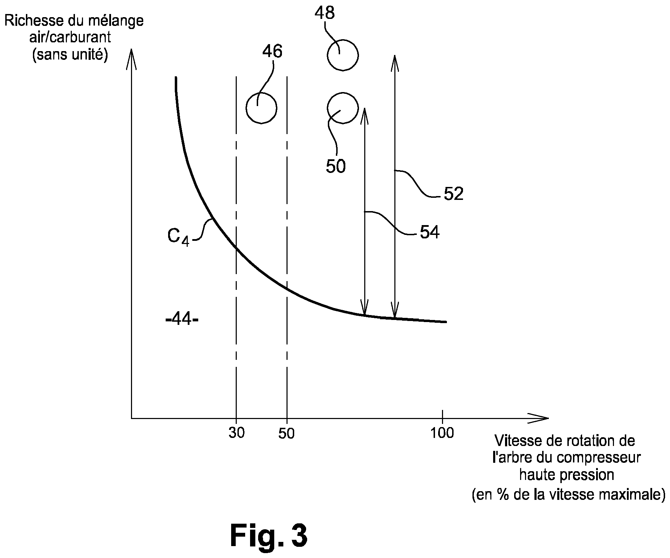

En figure 3 est visible une courbe C₄ représentant l'évolution de la richesse du mélange air/carburant dans la chambre de combustion en fonction de la vitesse de rotation du rotor du compresseur haute pression exprimée en pourcentage de sa vitesse maximale. La courbe C₄ correspond à la limite d'allumage de la chambre. Ainsi, dans la zone 44 située en dessous de la courbe C₄, la richesse est trop faible pour permettre un allumage de la chambre de combustion.

L'instant Tₐ du début de la phase d'allumage en figure 2 correspond à une vitesse de rotation comprise environ entre 30 à 50% de la vitesse de rotation maximale du rotor du compresseur haute pression. Cet instant Tₐ est représenté par le point 46 sur le graphe de la figure 3. La procédure d'allumage selon l'invention par augmentation de la richesse après la phase initiale en cas de non allumage, permet de décaler le point d'allumage en 48 vers le haut par rapport à un point 50 correspondant à une richesse maintenue constante comme dans la technique antérieure. De cette manière, la marge 52 du point 48 par rapport à la limite d'allumage est supérieure à la marge 54 du point 50.

## Revendications

1. Procédure d'allumage d'une chambre de combustion (10) de turbomachine, alimentée en carburant par des injecteurs (26) et comprenant des moyens d'allumage (28) du carburant injecté à l'intérieur de la chambre (10), comprenant une phase initiale (36) durant laquelle un débit constant de carburant est injecté dans la chambre (10) simultanément à l'excitation des moyens d'allumage (28) et en cas de non allumage de la chambre (10) au terme de la phase initiale (36), une seconde phase (38) durant laquelle on augmente rapidement le débit de carburant injecté de 20 à 30 %, la dite procédure étant **caractérisée en ce que** la seconde phase est suivie d'une phase d'augmentation progressive du débit de carburant qui est plus faible et moins rapide que la seconde phase.

2. Procédure selon la revendication 1, **caractérisée en ce que** la phase initiale a une durée de 5 à 8 secondes environ et l'augmentation rapide du débit de carburant est réalisée en un temps court d'environ 1 à 2 secondes.

3. Procédure selon la revendication 1 ou 2, **caractérisée en ce que** l'augmentation progressive (40) du débit de carburant dure de 10 à 15 secondes environ.

4. Procédure selon la revendication 3, **caractérisée en ce qu'**à la fin de l'augmentation progressive (40), le débit de carburant des injecteurs est supérieur d'environ 50 à 80 % au débit constant de la phase initiale (36).

5. Procédure selon l'une des revendications 1 à 4, **caractérisée en ce que** la vitesse de rotation de la turbomachine augmente progressivement pendant les deux phases précitées (38, 40).

6. Procédure selon l'une des revendications 1 à 5, **caractérisée en ce que** tous les injecteurs sont identiques et sont alimentés de la même façon en carburant pendant les deux phases précitées (38, 40).

7. Procédure selon l'une des revendications 4 à 6, **caractérisée en ce que**, quand le débit de carburant a augmenté jusqu'à une valeur maximale comprise entre 1,5 et 1,8 fois le débit de la phase initiale (36), il est stabilisé à cette valeur maximale jusqu'à la fin de la procédure d'allumage.

## Patentansprüche

1. Verfahren zum Zünden einer Turbomaschinenbrennkammer (10), die von Injektoren (26) mit Brennstoff versorgt wird und Einrichtungen (28) zum Zünden des in das Innere der Kammer (10) eingespritzten Brennstoffs aufweist, umfassend:
eine Anfangsphase (36), während der ein konstanter Brennstoffdurchsatz gleichzeitig mit der Anregung der Zündeinrichtungen (28) in die Kammer (10) eingespritzt wird, und
im Falle der Nicht-Zündung der Kammer (10) am Ende der Anfangsphase (36) eine zweite Phase (38), während der der eingespritzte Brennstoffdurchsatz um 20 bis 30% schnell erhöht wird,
wobei das Verfahren **dadurch gekennzeichnet ist, dass** auf die zweite Phase eine Phase allmählichen Anstiegs des Brennstoffdurchsatzes folgt, die schwächer und langsamer als die zweite Phase ist.

2. Verfahren nach Anspruch 1, **dadurch gekennzeichnet, dass** die Anfangsphase eine Dauer von etwa 5 bis 8 Sekunden hat und der schnelle Anstieg des Brennstoffdurchsatzes in einer kurzen Zeit von etwa 1 bis 2 Sekunden erfolgt.

3. Verfahren nach Anspruch 1 oder 2, **dadurch gekennzeichnet, dass** der allmähliche Anstieg (40) des Brennstoffdurchsatzes etwa 10 bis 15 Sekunden dauert.

4. Verfahren nach Anspruch 3, **dadurch gekennzeichnet, dass** am Ende des allmählichen Anstiegs (40) der Brennstoffdurchsatz der Injektoren um etwa 50 bis 80 % höher ist als der konstante Durchsatz der Anfangsphase (36).

5. Verfahren nach einem der Ansprüche 1 bis 4, **dadurch gekennzeichnet, dass** die Drehzahl der Turbomaschine während der beiden vorgenannten Phasen (38, 40) allmählich ansteigt.

6. Verfahren nach einem der Ansprüche 1 bis 5, **dadurch gekennzeichnet, dass** sämtliche Injektoren identisch sind und während der beiden vorgenannten Phasen (38, 40) auf die gleiche Art und Weise mit Brennstoff versorgt werden.

7. Verfahren nach einem der Ansprüche 4 bis 6, **dadurch gekennzeichnet, dass** dann, wenn der Brennstoffdurchsatz bis auf einen Maximalwert zwischen dem 1,5 und 1,8-fachen des Durchsatzes der Anfangsphase (36) angestiegen ist, dieser auf diesem Maximalwert bis zum Ende des Zündverfahrens gehalten wird.

## Claims

1. A procedure for igniting a combustion chamber (10) of a turbine engine, the chamber being fed with fuel by injectors (26) and having igniter means (28) for igniting the fuel injected into the chamber (10), comprising an initial stage (36) during which fuel is injected into the chamber (10) at a constant rate while simultaneously exciting the igniter means (28), and in the event of non-ignition of the chamber (10) at the end of the initial stage (36), it comprises a second stage (38) during which the rate at which fuel is injected is increased rapidly by 20% to 30%, said procedure being **characterized in that** the second stage is followed by a stage of progressively increasing the fuel flow rate by an amount that is smaller and slower than in the second stage.

2. A procedure according to claim 1, **characterized in that** the initial stage has a duration of about 5 s to 8 s and the rapid increase in the fuel flow rate takes place over a short time of about 1 s to 2 s.

3. A procedure according to claim 1 or claim 2, **characterized in that** the progressive increase (40) in the fuel flow rate lasts for about 10 s to 15 s.

4. A procedure according to claim 3, **characterized in that** the fuel flow rate from the injectors at the end of the progressive increase (40) is greater than about 50% to 80% of the constant flow rate during the initial stage (36) .

5. A procedure according to any one of claims 1 to 4, **characterized in that** the speed of rotation of the engine increases progressively during the two above-specified stages (38, 40).

6. A procedure according to any one of claims 1 to 5, **characterized in that** all of the injectors are identical and fed with fuel in the same manner during the two above-specified stages (38, 40).

7. A procedure according to any one of claims 4 to 6, **characterized in that**, when the fuel flow rate has increased up to a maximum value lying in the range 1.5 times to 1.8 times the flow rate of the initial stage (36), the fuel flow rate is stabilized at this maximum value until the end of the ignition procedure.
